(19) Europäisches Patentamt
European Patent Office
Office européen des brevets

(11) Veröffentlichungsnummer : **0 306 714 B1**

# (12) EUROPÄISCHE PATENTSCHRIFT

(45) Veröffentlichungstag der Patentschrift : **10.07.91 Patentblatt 91/28**

(51) Int. Cl.$^5$ : **C08F 20/10**

(21) Anmeldenummer : **88112889.6**

(22) Anmeldetag : **08.08.88**

## (54) Verfahren zur anionischen Polymerisation von (Meth)-Acrylsäurederivaten.

(30) Priorität : **18.08.87 DE 3727528**

(43) Veröffentlichungstag der Anmeldung : **15.03.89 Patentblatt 89/11**

(45) Bekanntmachung des Hinweises auf die Patenterteilung : **10.07.91 Patentblatt 91/28**

(84) Benannte Vertragsstaaten : **DE FR GB IT NL**

(56) Entgegenhaltungen : **FR-A- 1 156 022**

(73) Patentinhaber : **Reetz, Manfred Prof. Dr.**
**Wiesentalweg 14**
**W-3550 Marburg (DE)**

(72) Erfinder : **Reetz, Manfred T., Prof. Dr.**
**Wiesentalweg 14**
**W-3550 Marburg (DE)**
Erfinder : **Knauf, Thomas**
**Am Hofacker 7**
**W-3551 Lahntal-Gossfelden (DE)**

(74) Vertreter : **WILHELMS, KILIAN & PARTNER**
**Patentanwälte**
**Eduard-Schmid-Strasse 2**
**W-8000 München 90 (DE)**

EP 0 306 714 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft ein neues Verfahren zur anionischen Polymerisation von (Meth)Acrylsäurederivaten.

Verfahren zur anionischen Polymerisation von Vinylmonomeren sind bekannt (siehe z.B. die US-PS 4 351 924, 4 414 372, die EP-A-0 145 263 und Macromolecules 1984, 17, Seiten 1415-1417). Sie haben gegenüber den Verfahren zur radikalischen Polymerisation von Vinylmonomeren den Vorteil, daß mit ihnen Polymerisate mit einer sehr viel engeren Molmassenverteilung erhältlich sind. Da Polymerisate mit einer engen Molmassenverteilung günstigere Eigenschaften aufweisen als solche mit breiter Molmassenverteilung, hat die anionische Polymerisation zunehmend an Interesse gewonnen. Bei der Bearbeitung hat sich jedoch gezeigt, daß sich Vinylmonomere wie Styrol bei der anionischen Polymerisation wesentlich anders verhalten als Acrylsäureester. Während Styrol ohne Schwierigkeiten anionisch polymerisierbar ist und die gewünschten Polymerisate mit enger Molmassenverteilung gebildet werden, wird mit (Meth)Acrylsäurederivaten nur dann eine enge Molmassenverteilung erreicht, wenn zusätzlich zu speziellen kostspieligen anionischen Initiatoren (metall- und silylorganischen Verbindungen) nukleophile oder elektrophile Katalysatoren eingesetzt werden und/oder bei tiefen Temperaturen (Temperaturen von –30 bis –78°C) polymerisiert wird (siehe US-A-4 414 372, 4 417 034, EP-A-0 145 283, Macromolecules, Vol. 17, No. 7, (1984), 1415-1417 ; Angew. Chemie 98, 1116-1118 (1986) und DE-A-3 504 168).

Es bestand daher die Aufgabe, technisch leicht zugängliche, billige und stabile Initiatoren zu finden, mit deren Hilfe es gelingt, (Meth)Acrylsäurederivate ohne Mitverwendung von Katalysatoren auch bei Raumtemperatur anionisch zu Polymerisaten mit enger Molmassenverteilung zu polymerisieren.

Überraschenderweise wurde gefunden, daß Ammoniumsalze von resonanzstabilisierten Carbanionen wirksame Initiatoren für die anionische Polymerisation von (Meth)-Acrylsäurederivaten sind, die die gestellten Anforderungen, leichte Zugänglichkeit und Polymerisate mit enger Molmassenverteilung auch bei Raumtemperatur ohne Mitverwendung von Katalysatoren zu liefern, erfüllen.

Die initiierende Wirkung der Ammoniumsalze der Carbanionen ist u.a. auch deshalb überraschend, weil die entsprechenden Alkalisalze resonanzstabilisierter Carbanionen, falls sie überhaupt Polymerisationsreaktionen auslösen, dann nur eine völlig unbefriedigende Initiatorwirkung aufweisen.

Die Verwendung der Lithium-, Natrium- oder Kalium-Salze der resonanzstabilisierten Carbanionen als Initiatoren bei der Polymerisation von (Meth)Acrylsäureestern führt zu unvollständigem Umsatz und breiten Molekulargewichtsverteilungen. So verläuft z.B. die Polymerisation von n-Butylacrylat mit dem Natriumsalz des Ethylmalonsäurediethylesters in Tetrahydrofuran bei Raumtemperatur nur zu 55% ab und liefert Polybutylacrylate mit breiter Molmassenverteilung. Mit dem Kaliumsalz des 2-Nitropropans ließ sich n-Butylacrylat in Tetrahydrofuran bei Raumtemperatur überhaupt nicht polymerisieren.

Die Erfindung betrifft daher ein Verfahren zur ionischen Polymerisation von (Meth)Acrylsäurederivaten, bei dem die Polymerisation durch anionische Initiatoren ausgelöst und bei Temperaturen von –10 bis +75°C, gegebenenfalls in einem aprotischen Lösungsmittel, ausgeführt wird ; das Verfahren ist dadurch gekennzeichnet, daß als anionische Initiatoren Ammoniumsalze von resonanzstabilisierten Carbanionen verwendet werden.

Resonanzstabilisierte Carbanionen sind bekannt ; bei ihnen handelt es sich um Carbanionen, deren negative Ladung durch Resonanz mit den $\pi$-Elektronen der dem anionischen C-Atom benachbarten elektronegativen Atome oder Atomgruppen stabilisiert sind (siehe z.B. N. L. Allinger et. al., Org. Chemie, Berlin, New York, 1980, S. 422 und 423).

Die vorzugsweise als Initiatoren zu verwendenden Ammoniumsalze resonanzstabilisierter Carbanionen lassen sich durch die allgemeine Formel

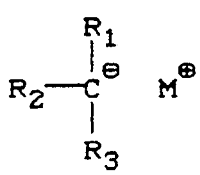 (I)

beschreiben, in der

$M^{\oplus}$ ein Ammonium-Ion bedeutet,

$R_1$ für eine elektronegative Gruppe,

$R_2$ für eine elektronegative Gruppe oder eine Alkyl-, Aryl- oder Trialkylsilyl-Gruppe und

$R_3$ für Wasserstoff, eine Alkyl-, Vinyl- oder Aryl-Gruppe oder eine Gruppe der Formel

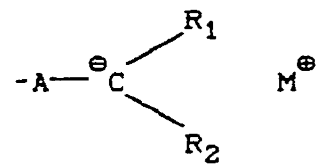

steht, in der

$R_1$, $R_2$ und $M^{\oplus}$ die vorstehend angegebene Beteutung haben und

A ein gegebenenfalls substituierter $C_1$-$C_6$-Alkylen-Rest, ein 1,4-Bis-methylen-phenyl- oder ein gegebenenfalls substituierter Arylen-, vorzugsweise ein Phenylen-1,4-Rest ist.

Als elektronegative Gruppen seien beispielsweise genannt: die $-C(O)OR$, $-C(O)R$, $-C(O)N(R)_2$, $-C(O)SR$, $-CN$, $-SO_2R$, $-NO_2$, $-P(O)(OR)_2$ und die Aryl-Gruppe, wobei R Alkyl oder Aryl, vorzugsweise $C_1$-$C_6$-Alkyl- oder Phenyl bedeutet.

Bevorzugt sind die Ammoniumsalze von Carbanionen der Formel I, wenn in dieser

$R_1$ für eine $-C(O)OR$, $-C(O)R$, $-C(O)N(R)_2$, $-C(O)SR$ oder eine $-SO_2R$-Gruppe, in der R ein $C_1$-$C_6$-Alkyl- oder ein Phenyl-Rest ist, oder eine $-CN$, $-NO_2$ oder eine Phenyl-Gruppe steht,

$R_2$ für eine der für $R_1$ genannten elektronegativen Gruppen oder einen $C_1$-$C_4$-Alkyl- oder einen Phenyl-Rest steht und

$R_3$ Wasserstoff, eine $C_1$-$C_4$-Alkyl- oder eine Phenylgruppe ist.

Die bevorzugten Ammonium-Ionen M entsprechen der Formel

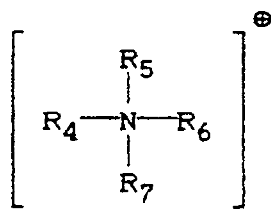 (II)

in der $R_4$, $R_5$, $R_6$ und $R_7$ unabhängig voneinander gegebenenfalls substituiertes Alkyl, Cycloalkyl, Aralkyl oder Aryl bedeuten, oder zwei benachbarte Reste $R_4$, $R_5$, $R_6$ und $R_7$ zusammen mit dem Stickstoffatom und gegebenenfalls weiteren Heteroatomen einen Heterocyclus bilden, mit der Maßgabe, daß die Summe der in den Resten $R_4$, $R_5$, $R_6$ und $R_7$ insgesamt enthaltenen C-Atome < 49, vorzugsweise < 30, ist und daß nur einer der Reste $R_4$, $R_5$, $R_6$ oder $R_7$ ein Arylrest ist.

Für $R_4$, $R_5$, $R_6$ und $R_7$ seien beispielsweise genannt: Als Alkylreste vor allem $C_1$-$C_{18}$-Alkylreste wie der Methyl-, Ethyl-, Propyl-, n-Butyl-, Heptyl-, Hexyl-, i-Octyl-, Dodecyl- und der Octadecylrest ; als Cycloalkylreste gegebenenfalls durch $C_1$-$C_4$-Alkylreste substituierte Cyclopentyl- und insbesondere Cyclohexylreste ; als Aralkylreste gegebenenfalls durch $C_1$-$C_4$-Alkylreste oder Methoxygruppen substituierte Benzylreste, als Arylreste, gegebenenfalls durch $C_1$-$C_4$-Alkylreste substituierte Phenylreste ; als Beispiele für Heterocyclen, die von zwei benachbarten Resten $R_4$, $R_5$, $R_6$ oder $R_7$ zusammen mit dem Stickstoffatom und gegebenenfalls weiteren Heteroatomen wie Sauerstoff, Schwefel oder Stickstoff gebildet werden können, seien vor allem 5- oder 6-gliedrige Heterocyclen, wie der Pyrrolidin-, Piperidin- oder Morpholinring genannt.

Die resonanzstabilisierten Carbanionen der bevorzugt zu verwendenden Ammoniumsalze der Formel I leiten sich vorzugsweise von leicht zugänglichen und gut handhabbaren CH-aciden Verbindungen ab, z.B. von Acylessigsäureestern wie Malonsäuredialkylestern, z.B. Malonsäurediethylester, Methylmalonsäurediethylester, Ethylmalonsäurediethylester, Methylmalonsäuredibenzylester, Methylmalonsäuredi-t-butylester, 2,2,5-Trimethyl-1,3-dioxan-4,6-dion ; Acetessigsäureestern, z.B. Acetessigsäureethylester und Methylacetessigsäureethylester, Phenylsulfonylessigsäureestern, z.B. Phenylsulfonylessigsäureethylester ; ω,ω-Dicyanoalkanen, z.B. Dicyanomethan, 1,1-Dicyanoethan ; Nitroalkanen, z.B. 2-Nitropropan, ω,ω-Bis-(phenylsulfonyl)-alkanen, z.B. 1,1-Bis-(phenylsulfonyl)-ethan, ferner von 1,4-Bis-[(2,2-bis-ethoxycarbonyl)-ethyl]-phenyl und von CH-aciden aromatischen Kohlenwasserstoffen wie 9-Methylfluoren und 9-Benzylfluoren.

Als Vertreter der erfindungsgemäß zu verwendenden Ammoniumsalze resonanzstabilisierter Carbanionen seien beispielsweise genannt:

Tetramethylammonium-, Tetraethylammonium-, Trimethylbenzylammonium-, Trimethyldodecylammonium-, Tetrabutylammonium-, Dimethylpiperidinium-, Dimethylmorpholinium, Trimethylanilinium-diethylethylmalonat, -2-Ni-tropropanat, -9-Benzylfluorenat, -diethylmalonat ; 1,1-Dicyanoethyltetrabutylammonium, -trimethylbenzylammonium, -trimethyldodecylammonium.

Bevorzugt werden wegen ihrer einfachen Zugänglichkeit Tetraalkylammoniumsalze wie Tetramethyl-, Tetraethyl- und Tetrabutyl-Ammoniumsalze der Carbanionen.

Die erfindungsgemäß als Initiatoren zu verwendenden Ammoniumsalze von resonanzstabilisierten Carbanionen sind z.T. bekannt : Chem. Ber. 49, 603 (1916), J. Am. Chem. Soc. 88, 307 (1966) ; Liebigs Ann. Chem. 557, 201 (1947) ; Tetrahedron Lett. 1969, 673 ; Doklady Akad. Nauk SSSR 199, 614 (1971) ; Acta Chem. Scand. 23, 2202 (1969). Sie sind z.B. auf folgenden Wegen erhältlich :

a) Durch doppelte Umsetzung von (Tetraalkyl)Ammoniumhalogeniden mit Alkalisalzen der CH-aciden Verbindungen in organischen Lösungsmitteln, in denen die entstehenden Alkalihalogenide schwer löslich sind. Solche Lösungsmittel sind z.B. Ether wie Diethylether und Tetrahydrofuran oder aromatische Kohlenwasserstoffe wie Toluol. Dieses Herstellungsverfahren hat den Vorteil der völligen Abwesenheit von Wasser und der damit verbundenen Möglichkeit, ohne weitere Trocknungsschritte die entstandene Lösung nach Abfiltrieren des Alkalihalogenids zu lagern, einzuengen oder unmittelbar zur Initiierung der Polymerisation einzusetzen.

b) Durch unmittelbare Neutralisation von CH-aciden Verbindungen mit (Tetraalkyl)Ammoniumhydroxiden unter gleichzeitigem Abziehen des bei der Neutralisation entstehenden Wassers im Hochvakuum.

Die erfindungsgemäß zu verwendenden anionischen Initiatoren werden in einer solchen Menge eingesetzt, daß das Molverhältnis Monomer/Initiator mindestens 1 : 1, vorzugsweise 5 : 1 bis 1,000 : 1, beträgt.

Das erfindungsgemäße Polymerisationsverfahren kann bei Temperaturen von −10 bis +80°C ausgeführt werden ; vorzugsweise wird die Polymerisation bei Temperaturen von −10 bis +75°C, insbesondere von +20 bis +60°C vorgenommen.

Die erfindungsgemäße anionische Polymerisation wird, wie dies für ionische Polymerisationen allgemein üblich ist, in einer Inertgasatmosphäre, z.B. Stickstoff, und unter Ausschluß von Feuchtigkeit vorgenommen.

Das erfindungsgemäße Polymerisationsverfahren wird vorzugsweise in einem aprotischen Lösungsmittel durchgeführt. Geeignete aprotische Lösungsmittel sind solche, die die Monomere und Polymere bei der vorgesehenen Reaktionstemperatur in ausreichendem Maße lösen : z.B. Ether wie Diethylether oder Tetrahydrofuran, Ester wie Essigsäureethylester, Nitrile wie Acetonitril und Benzonitril, Säureamide wie Dimethylformamid, Dimethylacetamid, N-Methylpyrrolidon und Dimethyltetrahydropyrimidinon, ferner Benzol und Toluol, Bevorzugt werden aprotische Lösungsmittel wie Tetrahydrofuran und Toluol verwendet.

Der Monomergehalt der Polymerisationslösungen sollte etwa 1 bis 90 Gew.-%, vorzugsweise 5 bis 50 Gew.-% betragen.

Das erfindungsgemäße Polymerisationsverfahren wird bevorzugt in folgender Weise ausgeführt :

Das erfindungsgemäß als Initiator zu verwendende Ammoniumsalz wird im vorgesehenen Lösungsmittel vorgelegt. Diese Initiatorlösung bzw. -suspension wird langsam unter Rühren mit dem gegebenenfalls mit Lösungsmittel verdünnten Monomer versetzt. Soll die Polymerisation bei konstanter Temperatur vorgenommen werden, so richtet sich die Geschwindigkeit, mit der das Monomer zugegeben wird, nach den Möglichkeiten, die Reaktionswärme abzuführen. Nach Abschluß der Polymerisation können die im Polymerisationsgemisch vorliegenden Poly(meth)acrylate in üblicher Weise desaktiviert werden, z.B. durch Zugabe von $HCl/H_2O$ oder Alkylhalogeniden oder aber sie können durch Zugabe von Chlortrimethylsilan in lebende, lagerungsfähige Polymere überführt werden, die O-Trimethylsilylketenketal-Endgruppen aufweisen. Als Alkylhalogenide werden vorzugsweise primäre Alkylhalogenide wie Methyl-, Allyl-, oder gegebenenfalls substituierte Benzylchloride, -bromide und -jodide, ferner primäre Dihalogenide wie α,α'-Dibrom-p-xylol verwendet.

Die im erfindungsgemäßen Verfahren verwendeten Initiator-Lösungen oder -Suspensionen sind beispielsweise wie folgt erhältlich :

a) Zu einer Suspension des Alkalihydrids im vorgesehenen Lösungsmittel wird die äquivalente Menge einer CH-aciden Verbindung getropft. Unter Wasserstoffentwicklung bildet sich das Alkalisalz der CH-aciden Verbindung als Suspension oder Lösung. Diese Suspension oder Lösung wird mit der Lösung oder der Suspension des entsprechenden Ammoniumhalogenids versetzt und einige Zeit gerührt. Es entsteht ein feinteiliger Alkalihalogenid-Niederschlag ; dieser wird in Inertgasatmosphäre abgetrennt. Die anfallende klare Lösung des Ammonium-Carbeniats kann unmittelbar für die Polymerisation verwendet werden ; man kann jedoch auch das Ammonium-Carbeniat durch Entfernung des Lösungsmittels in Substanz (meistens in Form eines Öles oder eines Feststoffes) isolieren und diesen für die Polymerisation verwenden.

b) Es wird eine definierte Menge einer Lösung des entsprechenden Ammoniumhydroxids in Methanol oder Wasser mit der Äquivalentmenge einer CH-aciden Verbindung versetzt und anschließend im Hochvakuum vom Lösungsmittel befreit. Der Rückstand, das Ammoniumsalz des Carbanions, kann anschließend entweder in Substanz oder nach Aufnehmen in einem Lösungsmittel, in Form einer Lösung eingesetzt oder

aufbewahrt werden.

Die Ammoniumsalze der Carbanionen sind sowohl in Lösung als auch in Substanz in einer Inertgasatmosphäre bei Raumtemperatur stabil.

Als Vertreter der in dem erfindungsgemäßen Polymerisationsverfahren einsetzbaren (Meth)Acrylsäurederivate seien beispielsweise genannt : Acrylsäureester wie Methylacrylat, Ethylacrylat, 2,2,2-Trifluorethylacrylat, n-Butylacrylat, 2-Ethylhexylacrylat, Allylacrylat, Sorbylacrylat, 2-(Dimethylaminoethyl)-acrylat, 2,2,3,3,4,4,4-Heptafluorobutylacrylat, 2-Cyanoethylacrylat, 4-Fluorophenylacrylat, Phenylacrylat ; Methacrylsäureester wie Ethyl-und n-Butylmethacrylat ; ferner Acrylnitril.

In den folgenden Beispielen wird zur Kennzeichnung der erfindungsgemäß erhaltenen Polymerisate die Kenngröße D (Polydispersität) verwendet. Die Polydispersität D ist das Verhältnis aus Massenmittelwert der Molmasse ($M_w$) und Zahlenmittelwert der Molmasse ($M_n$) ; $D = M_w/M_n$. Die Molmassenmittelwerte wurden mittels Gelpermeationschromatografie bestimmt unter Verwendung einer universellen Eichbeziehung.

Die in den Beispielen 1 bis 10 verwendeten Initiatoren wurden wie folgt hergestellt :

Initiator 1 (1,1-Dicyanoethyl-tetrabutylammonium)

In einem mit Magnetrührer ausgerüsteten 100 ml-Kölbchen werden unter Stickstoff 3 ml (3,0 mmol) einer 1-molaren Lösung von Tetrabutylammoniumhydroxid in Methanol mit 0,24 g (3,0 mmol) 1,1-Dicyanoethan versetzt. Die Lösung wird 30 Minuten gerührt und anschließend im Vakuum über Phosphorpentoxid vom Methanol und Wasser befreit. Das 1,1-Dicyanoethyl-tetrabutylammonium bleibt in Form eines weißen Feststoffes zurück. Das Salz ist bei Raumtemperatur unter Inertgas stabil.

Initiator 2 (Tetrabutylammonium-diethylethylmalonat)

Nach der für die Herstellung von Initiator 1 beschriebenen Arbeitsweise wird aus 3 mmol Tetrabutylammoniumhydroxid und 0,621 g (3,30 mmol) Ethylmalonsäurediethylester Tetrabutylammonium-diethylethylmalonat in Form einer farblosen viskosen Flüssigkeit erhalten. Der Initiator ist unter Inertgas bei Raumtemperatur stabil.

Initiator 3 (Tetrabutylammonium-9-benzylfluorenat)

Nach der für die Herstellung von Initiator 1 beschriebenen Arbeitsweise wird aus 3 mmol Tetrabutylammoniumhydroxid und 0,769 g (3,0 mmol) 9-Benzylfluoren Tetrabutylammonium-9-benzylfluorenat in Form eines orangefarbenen Feststoffes erhalten. Das Salz ist unter Inertgas bei Raumtemperatur stabil.

Initiator 4 (Tetrabutylammonium-2-nitropropanat)

Nach der für die Herstellung von Initiator 1 beschriebenen Arbeitsweise wird aus 3 mmol Tetrabutylammoniumhydroxid und 0,294 g (3,30 mmol) 2-Nitropropan Tetrabutylammonium-2-nitropropanat in Form eines weißen Salzes erhalten. Das Salz ist unter Inertgas bei Raumtemperatur stabil.

Initiator 5 (Lösung von 1,1-Dicyanoethyl-tetrabutylammonium in Tetrahydrofuran)

In einem durch Erwärmen im Vakuum getrockneten, mit Argon belüfteten 100 ml-Kölbchen werden 0,09 g (3,0 mmol) einer 80 %igen Dispersion von Natriumhydrid in Paraffin in 20 ml wasserfreiem Tetrahydrofuran vorgelegt und mit 0,24 g (3,0 mmol) 1,1-Dicyanoethan bei Raumtemperatur versetzt. Unter starker Wasserstoffentwicklung bildet sich eine Suspension des 1,1-Dicyanoethyl-natriums. Diese wird mit 0,917 g (3,3 mmol) Tetrabutylammoniumchlorid versetzt und einige Minuten gerührt. Das abgeschiedene Natriumchlorid wird unter Argon abgesaugt. Es wird eine klare Lösung von 1,1-Dicyanoethyl-tetrabutylammonium in Tetrahydrofuran erhalten. Die Lösung ist bei Raumtemperatur stabil.

Initiator 6 (Lösung von Tetrabutylammonium-diethylethylmalonat in Tetrahydrofuran)

Es werden nach der für die Herstellung des Initiators 5 beschriebenen Arbeitsweise 3 mmol Natriumhydrid in 20 ml Tetrahydrofuran mit 0,565 g (3,0 mmol) Ethylmalonsäurediethylester umgesetzt. Unter starker Wasserstoffentwicklung bildet sich eine klare farblose Lösung von Natriumdiethylethylmalonat in Tetrahydofuran. Diese wird in der bei der Herstellung des Initiators 5 beschriebenen Arbeitsweise mit 3,3 mmol Tetrabutylammoniumchlorid versetzt und anschließend vom entstandenen Natriumchlorid befreit. Es wird eine klare Lösung von Tetrabutylammonium-diethylethylmalonat in Tetrahydrofuran erhalten. Die Lösung ist bei Raumtemperatur

stabil.

Beispiele

Beispiele 1

In einem durch Erwärmen im Vakuum getrockneten, mit Argon belüfteten 100 ml-Kölbchen werden 0,9677 g (3 mmol) Initiator 1 (1,1-Dicyanoethyl-tetrabutylammonium) in 20 ml wasserfreiem Tetrahydrofuran gelöst. Die Lösung wird bei Raumtemperatur unter kräftigem Rühren innerhalb von 5 Minuten mit der Lösung von 3,85 g (30,0 mmol) n-Butylacrylat in 10 ml Tetrahydrofuran versetzt. Nach beendeter Monomerzugabe und Abklingen der exothermen Reaktion wird das Polymerisationsgemisch noch 15 Minuten bei Raumtemperatur gerührt. Anschließend wird die Polymerisationslösung zum Desaktivieren des Polymers in mit Diethylether überschichtete halbkonzentrierte Salzsäure eingetragen. Die organische Phase wird abgetrennt und die wäßrige Phase dreimal mit Ether extrahiert. Die vereinigten organischen Phasen werden zweimal mit Wasser gewaschen, anschließend über Magnesiumsulfat getrocknet und abschließend im Vakuum vom Lösungsmittel befreit.

Es werden 3,46 g (85% der Theorie) Polybutylacrylat erhalten ; $M_n$ = 1,77 kg/mol ; $M_w$ = 1,96 kg/mol ; $M_n$ (theoretisch) = 1,36 kg/mol ; D = 1,11.

Beispiel 2

1,2921 g (3 mmol) Initiator 6 (Lösung von Tetrabutylammonium-diethylethylmalonat in Tetrahydrofuran) werden bei Raumtemperatur unter kräftigem Rühren innerhalb von 5 Minuten mit der Lösung von 3,85 g (30,0 mmol) n-Butylacrylat in 10 ml Tetrahydofuran versetzt. Nach beendeter Monomerzugabe und Abklingen der exothermen Polymerisationsreaktion wird das Polymerisationsgemisch noch 15 Minuten bei Raumtemperatur gerührt und anschließend nach der in Beispiel 1 beschriebenen Arbeitsweise aufgearbeitet.

Es werden 4.05 g (95% der Theorie) Polybutylacrylat erhalten ; $M_n$ = 1,79 kg/mol ; $M_w$ = 2,03 kg/mol ; $M_n$ (theoretisch) = 1,47 kg/mol ; D = 1,13.

Beispiel 3

Es werden nach der in Beispiel 2 beschriebenen Arbeitsweise 3,85 g (30,0 mmol) Butylacrylat mit 1,2921 g (3,0 mmol) Initiator 6 (Lösung von Tetrabutylammonium-diethylethylmalonat in Tetrahydrofuran) polymerisiert. Nach Beendigung der Polymerisation wird die Polymerisationslösung mit 0,51 g (3,0 mmol) Benzylbromid versetzt. Nach Abklingen der Alkylierungsreaktion wird das Polymerisationsgemisch nach der in Beispiel 2 beschriebenen Arbeitsweise aufgearbeitet.

Es werden 4,3 g (92% der Theorie) Polybutylacrylat erhalten ; $M_n$ = 1,85 kg/mol ; $M_w$ = 2,13 kg/mol ; $M_n$ (theoretisch) = 1,56 kg/mol ; D = 1,15.

Beispiel 4

Es werden nach der in Beispiel 2 beschriebenen Arbeitsweise 3,85 g (30,0 mmol) n-Butylacrylat mit der Lösung von Initiator 2 (Tetrabutylammonium-diethylethylmalonat) in 10 ml Toluol polymerisiert. Nach Beendigung der Polymerisationsreaktion wird die Polymerisationslösung mit 0,32 g (3,0 mmol) Trimethylsilylchlorid versetzt. Der entstandene Niederschlag von Tetrabutylammoniumchlorid wird unter Inertgas abgesaugt ; die Polymerisationslösung wird im Vakuum vom Lösungsmittel befreit.

Es werden 4,2 g (91% der Theorie) Trimethylsilyl-Engruppen aufweisendes Polybutylacrylat erhalten ; $M_n$ = 1,82 kg/mol ; $M_w$ = 2,13 kg/mol ; $M_n$ (theoretisch) = 1,54 kg/mol ; D = 1,17.

Beispiel 5

1,2921 g (3 mmol) Initiator 2 (Tetrabutylammonium-diethylethylmalonat) werden in einem durch Erwärmen im Vakuum getrockneten, mit Argon belüfteten 250 ml-Kölbchen in 20 ml wasserfreiem Toluol gelöst. Die Lösung wird bei Raumtemperatur unter kräftigem Rühren innerhalb von 15 Minuten mit der Lösung von 30,76 g (240,0 mmol) n-Butylacrylat in 50 ml Toluol versetzt. Nach beendeter Monomerzugabe und Abklingen der exothermen Polymerisationsreaktion wird das Polymerisationsgemisch noch 30 Minuten bei Raumtemperatur gerührt. Anschließend wird die Polymerisationslösung in mit Diethylether überschichtete halbkonzentrierte Salzsäure eingetragen. Die organische Phase wird abgetrennt und die wäßrige Phase dreimal mit Ether extrahiert. Die vereinigten organischen Phasen werden zweimal mit Wasser gewaschen, dann über Magnesiumsulfat getrocknet und abschließend im Vakuum vom Lösungsmittel befreit.

Es werden 29,1 g (93% der Theorie) Polybutylacrylat erhalten ; $M_n$ = 11,08 kg/mol ; $M_w$ = 13,2 kg/mol ; $M_n$ (theoretisch) = 10,44 kg/mol ; D = 1,19.

Beispiel 6

0,43 g (1 mmol) Initiator 2 (Tetrabutylammonium-diethylethylmalonat) werden in einem durch Erwärmen im Vakuum getrockneten, mit Argon belüfteten 250 ml-Kölbchen in 20 ml wasserfreiem Tetrahydrofuran gelöst. Die Lösung wird bei Raumtemperatur unter kräftigem Rühren innerhalb von 20 Minuten mit der Lösung von 20,5 g (160,0 mmol) Butylacrylat in 40 ml Tetrahydrofuran versetzt. Nach beendeter Monomerzugabe und Abklingen der exotermen Reaktion wird das Polymerisationsgemisch noch 30 Minuten bei Raumtemperatur gerührt. Anschließend wird die Lösung nach der in Beispiel 3 beschriebenen Arbeitsweise aufgearbeitet.

Es werden 18,9 g (91% der Theorie) Polybutylacrylat erhalten ; $M_n$ = 20,0 kg/mol ; $M_w$ = 23,9 kg/mol ; $M_n$ (theoretisch) = 20,7 kg/mol ; D = 1,19.

Beispiel 7

0,9947 g (3 mmol) Initiator 4 (Tetrabutylammonium-2-nitropropanat) werden in 30 ml Toluol gelöst. Die Lösung wird bei Raumtemperatur unter kräftigem Rühren innerhalb von 5 Minuten mit 3,0 g (30,0 mmol) Methylmethacrylat versetzt. Nach beendeter Monomerzugabe und Abklingen der exothermen Polymerisationsreaktion wird das Reaktionsgemisch noch 15 Minuten bei Raumtemperatur gerührt. Anschließend wird das Polymerisationsgemisch in halbkonzentrierte Salzsäure, die mit Diethylether überschichtet ist, eingegossen. Die organische Phase wird abgetrennt, dreimal mit Wasser gewaschen, über Magnesiumsulfat getrocknet und abschließend im Vakuum vom Lösungsmittel befreit.

Es werden 2,95 g (92% der Theorie) Polymethylmethacrylat erhalten ; $M_n$ = 1,43 kg/mol ; $M_w$ = 1,80 kg/mol; $M_n$ (theoretisch) = 1,09 kg/mol ; D = 1,26.

Beispiel 8

0,9677 g (3 mmol) Initiator 1 (1,1-Dicyanoethyltetrabutylammonium) werden in der in Beispiel 1 beschriebenen Weise in 30 ml Tetrahydrofuran gelöst. Die Lösung wird bei Raumtemperatur unter kräftigem Rühren innerhalb von 15 Minuten mit der Lösung von 3,98 g (75 mmol) Acrylnitril in 15 ml Tetrahydrofuran versetzt. Nach beendeter Monomerzugabe und Abklingen der exothermen Polymerisationsreaktion wird das Reaktionsgemisch noch 15 Minuten bei Raumtemperatur gerührt. Anschließend wird das Polymerisationsgemisch in salzsäurehaltiges Methanol eingegossen. Der ausfallende Niederschlag wird abgesaugt, in wenig Aceton gelöst und durch Zugabe von Methanol erneut ausgefällt. Der Niederschlag wird abgesaugt und im Vakuum von Lösungsmittelresten befreit.

Es werden 4,2 g (92% der Theorie) Polyacrylnitril erhalten.

Beispiel 9

3,85 g (30,0 mmol) n-Butylacrylat werden unter Verwendung von 1,496 g (3 mmol) Initiator 3 (Tetrabutylammonium-9-benzylfluorenat) nach der in Beispiel 1 beschriebenen Arbeitsweise polymerisiert.

Es werden 4,2 g (91% der Theorie) Polybutylacrylat erhalten ; $M_n$ = 0,81 kg/mol ; $M_w$ = 2,11 kg/mol ; $M_n$ (theoretisch) = 1,54 kg/mol ; D = 2,62.

Beispiel 10 (Vergleichsbeispiel)

Es wird nach der für die Herstellung des Initiators 6 beschriebenen Arbeitsweise die Lösung von 3 mmol Natriumdiethylethylmalonat in 20 ml Tetrahydrofuran hergestellt. Die klare farblose Lösung wird bei Raumtemperatur unter kräftigem Rühren innerhalb von 5 Minuten mit 3,85 g (30,0 mmol) Butylacrylat versetzt. Nach beendeter Monomerzugabe und Abklingen der exothermen Polymerisationsreaktion wird das Reaktionsgemisch noch 15 Minuten bei Raumtemperatur gerührt und anschließend nach der in Beispiel 1 beschriebenen Arbeitsweise aufgearbeitet.

Es werden 1,92 g (50% der Theorie) Polybutylacrylat erhalten ; das Gelpermeationschromatogram weist eine breite multimodale Molekulargewichtsverteilung auf.

**Patentansprüche**

1. Verfahren zur ionischen Polymerisation von (Meth)Acrylsäurederivaten, bei dem die Polymerisation durch anionische Initiatoren ausgelöst und bei Temperaturen von −10 bis +80°C, gegebenenfalls in einem aprotischen Lösungsmittel, ausgeführt wird, dadurch gekennzeichnet, daß als anionische Initiatoren Ammoniumsalze von resonanzstabilisierten Carbanionen verwendet werden.

2. Verfahren gemäß Anspruch 1, dadurch gekennzeichnet, daß die Ammoniumsalze der resonanzstabilisierten Carbanionen der Formel

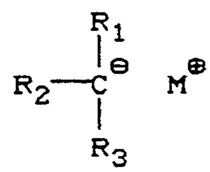

entsprechen, in der

$M^{\oplus}$ ein Ammonium-Ion bedeutet,
$R_1$ für eine elektronegative Gruppe,
$R_2$ für eine elektronegative Gruppe oder eine Alkyl-, Aryl- oder Trialkylsilyl-Gruppe und
$R_3$ für Wasserstoff, eine Alkyl-, Vinyl- oder Aryl-Gruppe oder eine Gruppe der Formel

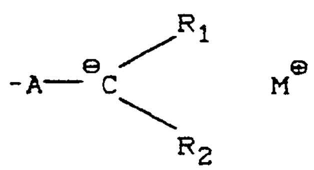

steht, in der

$R_1$, $R_2$ und $M^{\oplus}$ die vorstehend angegebene Bedeutung haben und
A ein gegebenenfalls substituierter $C_1$-$C_6$-Alkylen-Rest, ein 1,4-Bis-methylen-phenyl- oder ein gegebenenfalls substituierter Arylen-Rest ist.

3. Verfahren gemäß Anspruch 2, dadurch gekennzeichnet, daß die elektronegative gruppe eine $-C(O)OR$, $-C(O)R$, $-C(O)N(R)_2$, $-C(O)SR$, $-CN$, $-SO_2R$, $-NO_2$, $-P(O)(OR)_2$ oder eine Aryl-Gruppe ist, wobei R für einen Alkyl- oder Aryl-Rest steht.

4. Verfahren gemäß Anspruch 2, dadurch gekennzeichnet, daß

$R_1$ für eine $-C(O)OR$, $-C(O)R$, 1067C(O)N(R)$_2$, $-C(O)SR$ oder eine $-SO_2R$-Gruppe, in der R ein $C_1$-$C_6$-Alkyl- oder ein Phenyl-Rest ist, oder eine $-CN$, $-NO_2$ oder eine Phenyl-Gruppe steht,
$R_2$ für eine der für $R_1$ genannten elektronegativen Gruppen oder einen $C_1$-$C_4$-Alkyl- oder einen Phenyl-Rest steht und
$R_3$ Wasserstoff, eine $C_1$-$C_4$-Alkyl- oder eine Phenylgruppe ist.

5. Verfahren nach Anspruch 2, dadurch gekennzeichnet, daß die Ammonium-Ionen $M^{\oplus}$ der Formel

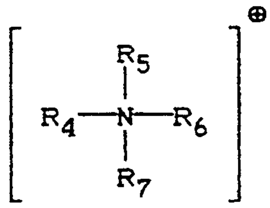

entsprechen, in der $R_4$, $R_5$, $R_6$ und $R_7$ unabhängig voneinander gegebenenfalls substituiertes Alkyl, Cycloalkyl, Aralkyl oder Aryl bedeuten, oder zwei benachbarte Reste $R_4$, $R_5$, $R_6$ und $R_7$ zusammen mit dem Stickstoffatom und gegebenenfalls weiteren Heteroatomen einen Heterocyclus bilden, mit der Maßgabe, daß die Summe der in den Resten $R_4$, $R_5$, $R_6$ und $R_7$ insgesamt enthaltenen C-Atome < 49, is und daß nur einer der Reste $R_4$, $R_5$, $R_6$ oder $R_7$ ein Arylrest ist.

6. Verfahren nach einem der Ansprüche 1 bis 5, dadurch gekennzeichnet, daß man die Polymerisation bei Temperaturen von −10 bis +75°C vornimmt.

7. Verfahren nach einem der Ansprüche 1 bis 6, dadurch gekennzeichnet, daß man die Polymerisation in einem aprotischen Lösungsmittel ausführt.

8. Verfahren nach einem der Ansprüche 1 bis 7, dadurch gekennzeichnet, daß man Acrylsäureester polymerisiert.

## Claims

1. Process for the ionic polymerisation of methacrylic acid derivatives, in which the polymerisation is begun by anionic initiators and is carried out at temperatures from −10 to +80°C, optionally in an aprotic solvent, characterised in that as anionic initiators ammonium salts of resonance-stabilized carbanions are used.

2. Process according to claim 1, characterised in that the ammonium salts of resonance-stabilized carbanions correspond to the formula

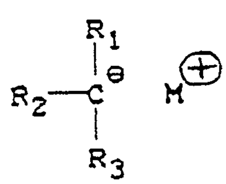

in which

$M^{\oplus}$ means an ammonium ion,

$R_1$ stands for an electronegative group

$R_2$ stands for an electronegative group or an alkyl, aryl or trialkylsilyl group and

$R_3$ stands for hydrogen, an alkyl, vinyl, or aryl group or a group of the formula

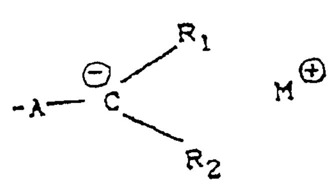

in which

$R_1$, $R_2$ and $M^{\oplus}$ have the meanings given above and

A is an optionally-substituted $C_1$-$C_6$-alkylene residue, a 1,4-bis-methylene-phenyl or an optionallysubstituted arylene residue.

3. Process according to claim 2, characterised in that the electronegative group is a −C(O)OR, −C(O)R,

$-C(O)N(R)_2$, $-C(O)SR$, $-CN$, $-SO_2R$, $-O_2R$, $-P(O)(OR)_2$ or aryl group, in which R stands for an alkyl or aryl residue.

4. Process according to claim 2, characterised in that

$R_1$ stands for a $-C(O)OR$, $-C(O)R$, $-C(O)N(R)_2$, $-C(O)SR$ or $-SO_2R-$ group, in which R is a $C_1$-$C_6$ alkyl or a phenyl residue, or a CN, $NO_2$ or a phenyl group,

$R_2$ stands for one of the electronegative groups designated for $R_1$ or a $C_1$-$C_4$ alkyl or a phenyl residue and

$R_3$ is hydrogen, a $C_1$-$C_4$ alkyl or a phenyl group.

5. Process according to claim 2, characterised in that the ammonium ions $M^{\oplus}$ correspond to the formula

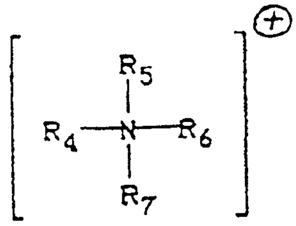

in which $R_4$, $R_5$, $R_6$, and $R_7$, mean independently from one another optionally-substituted alkyl, cycloalkyl, aralkyl or aryl, or two neighbouring residues $R_4$, $R_5$, $R_6$ and $R_7$ form a heterocycle together with the nitrogen atom and optionally further heteroatoms, with the proviso that the sum of the carbon atoms in the residues of $R_4$, $R_5$, $R_6$, and $R_7$ is < 49 and that only one of the residues $R_4$, $R_5$, $R_6$ or $R_7$ is an aryl residue.

6. Process according to any of claims 1 to 5, characterised in that the polymerisation is carried out at temperatures from −10 to +75°C,

7. Process according to any of claims 1-6, characterised in that the polymerisation is performed in an aprotic solvent.

8. Process according to any of claims 1-7, characterised in that acrylic acid esters are polymerised.

## Revendications

1. Procédé pour la polymérisation ionique de dérivés d'acide (méth)acrylique, dans lequel la polymérisation est déclenchée par des initiateurs anioniques et est effectuée à des températures de −10 à +80°C, éventuellement dans un solvant aprotique, caractérisé en ce qu'on utilise comme initiateurs anioniques des sels d'ammonium de carbanions stabilisés vis-à-vis de la résonance.

2. Procédé selon la revendication 1, caractérisé en ce que les sels d'ammonium des carbanions stabilisés vis-à-vis de la résonance correspondent à la formule

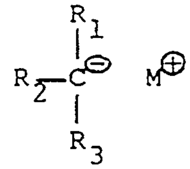

où

$M^{\oplus}$ représente un ion ammonium,

$R_1$ désigne un groupe électronégatif,

$R_2$ désigne un groupe électronégatif ou un groupe alkyle, aryle ou trialkylsilyle et

$R_3$ désigne l'hydrogène, un groupe alkyle, vinyle ou aryle ou un groupe de formule

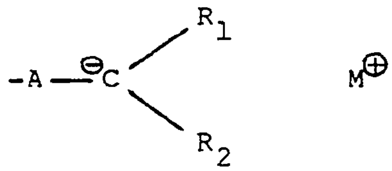

où

$R_1$, $R_2$ et $M^{\oplus}$ ont la signification indiquée ci-dessus et

A est un reste alkylène en $C_1$-$C_6$ éventuellement substitué, un reste 1,4-bis-méthylène-phényle ou un reste arylène éventuellement substitué.

3. Procédé selon la revendication 2, caractérisé en ce que le groupe électronégatif est un groupe $-C(O)OR$, $-C(O)R$, $-C(O)N(R)_2$, $-C(O)SR$, $-CN$, $-SO_2R$, $-NO_2$, $-P(O)(OR)_2$ ou un groupe aryle, R étant un reste alkyle ou aryle.

4. Procédé selon la revendication 2, caractérisé en ce que

$R_1$ désigne un groupe $-C(O)OR$, $-C(O)R$, $-C(O)N(R)_2$, $-C(O)SR$ ou $-SO_2$ R, dans lequel R est un reste alkyle en $C_1$-$C_6$ ou phényle, ou désigne un groupe $-CN$, $-NO_2$ ou phényle,

$R_2$ représente un des groupes électronégatifs mentionnés pour $R_1$ ou un reste alkyle en $C_1$-$C_4$ ou phényle, et

$R_3$ est l'hydrogène, un groupe alkyle en $C_1$-$C_4$ ou un groupe phényle.

5. Procédé selon la revendication 2, caractérisé en ce que les ions ammonium $M^{\oplus}$ correspondent à la formule

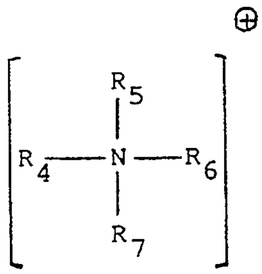

où $R_4$, $R_5$, $R_6$ et $R_7$ représentent, indépendamment l'un de l'autre ; un groupe alkyle, cycloalkyle, aralkyle ou aryle ; éventuellement substitué, ou deux restes voisins $R_4$, $R_5$, $R_6$ et $R_7$ forment ensemble avec l'atome d'azote et éventuellement d'autres hétéroatomes un hétérocycle, avec pour condition que la somme des atomes de carbone contenus au total dans les restes $R_4$, $R_5$, $R_6$ et $R_7$ soit inférieure à 49 et que seul un des restes $R_4$, $R_5$, $R_6$ ou $R_7$ soit un reste aryle.

6. Procédé selon l'une quelconque des revendications 1 à 5, caractérisé en ce qu'on effectue la polymérisation à des températures de $-10$ à $+75°C$.

7. Procédé selon l'une quelconque des revendications 1 à 6, caractérisé en ce qu'on effectue la polymérisation dans un solvant aprotique.

8. Procédé selon l'une quelconque des revendications 1 à 7, caractérisé en ce qu'on polymérise des esters d' acide acrylique.